# EUROPÄISCHE PATENTSCHRIFT

(11) **EP 3 282 182 B1**
(45) Veröffentlichungstag und Bekanntmachung des Hinweises auf die Patenterteilung: **31.07.2019**
(21) Anmeldenummer: 17175684.4
(22) Anmeldetag: 13.06.2017
(51) Int. Cl.: F21S 41/143, F21S 41/255

(54) **KRAFTFAHRZEUGSCHEINWERFER MIT GERINGER BAUTIEFE**
MOTOR VEHICLE HEADLAMP WITH LOW INSTALLATION DEPTH
PHARE DE VÉHICULE AUTOMOBILE DE FAIBLE ÉPAISSEUR

(30) Priorität: 08.07.2016 DE 102016112617
(43) Veröffentlichungstag der Anmeldung: 14.02.2018
(73) Patentinhaber: Automotive Lighting Reutlingen GmbH, 72762 Reutlingen (DE)
(72) Erfinder: Knittel, Joachim, 72762 Reutlingen (DE); Licht, Martin, 72762 Reutlingen (DE); Buchberger, Christian, 72770 Reutlingen (DE); Stefanov, Emil P., 72762 Reutlingen (DE)
(74) Vertreter: DREISS Patentanwälte PartG mbB

(56) Entgegenhaltungen:
- WO-A1-2014/164792
- WO-A1-2015/058227
- DE-A1-102004 019 318
- DE-A1-102004 035 761
- DE-A1-102012 207 621
- US-A1- 2016 018 081

## Beschreibung

Die vorliegende Erfindung betrifft einen Kraftfahrzeugscheinwerfer nach dem Oberbegriff des Anspruchs 1.

Ein solcher Scheinwerfer ist aus der WO 2015/058227 bekannt und weist eine Lichtquellenanordnung und eine Vielzahl erster Projektionsoptiken auf, von denen jede ein erstes Paar aus je einer ersten Bildmaske und je einer ersten Projektionslinse aufweist, die durch die je eine Bildmaske hindurch von der Lichtquellenanordnung beleuchtet wird und die jeweils eine erste objektseitige Brennweite aufweist, und wobei die Bildmaske jedes ersten Paars in einer objektseitigen Brennfläche der ersten Projektionslinse des jeweiligen ersten Paars liegt und wobei ein von der Lichtquellenanordnung beleuchteter Teil der ersten Bildmaske eine Form von wenigstens einem ersten Teil einer Gesamtlichtverteilung des Scheinwerfers besitzt, und wobei die ersten Projektionslinsen in einer ersten Ebene angeordnet und von der Lichtquellenanordnung aus gleichen Richtungen beleuchtet werden.

Herkömmliche LED-Scheinwerfer, die eine Lichtverteilung mit nur einer einzigen Projektionsoptik erzeugen, besitzen, bedingt durch eine Brennweite der Projektionslinse von etwa 10 cm, eine unerwünscht große Scheinwerferbautiefe von 20 cm bis 30 cm.

Es besteht ein Bedürfnis nach effizienten Scheinwerfern, die eine geringere Einbautiefe aufweisen, und deren Aufbau die Erzeugung eines vorbestimmten Intensitätsprofils erlaubt. Ein solches Intensitätsprofil weist zum Beispiel eine Hell-Dunkelgrenze und/oder einen zentralen Spot auf, der wesentlich heller als der daran angrenzende Bereich der übrigen Lichtverteilung ist.

Eine simple Verringerung der Brennweite der Projektionslinse könnte zwar die Einbautiefe verringern, würde aber die aus der Projektion resultierende Lichtverteilung in einem unzulässigen Ausmaß vergrößern, da eine Verringerung der Brennweite zu einer Vergrößerung des Vergrößerungsfaktors führt. Eine als Abhilfe mögliche Begrenzung der Lichtverteilung durch Blenden würde die Effizienz des Scheinwerfers unerwünscht verkleinern.

Die eingangs genannte WO 2015/058227 beschreibt, dass die mit der Verwendung der Vielzahl von Projektionsoptiken einhergehende Verkleinerung der Brennweiten und Abmessungen der einzelnen Projektionsoptiken zu einer guten Effizienz führt, während eine Verkleinerung der Brennweite einer herkömmlichen Projektionsoptik, deren Abmessungen im Wesentlichen unverändert bleiben, zwar eine Verringerung der Bautiefe, aber auch eine Verschlechterung des Wirkungsgrades bewirkt.

In Bezug auf die Erzeugung einer vorbestimmten Intensitätsverteilung wird gemäß Figur 3 der WO 2015/058227 vorgeschlagen, Bilder einer Vielzahl von Mikroblenden der Projektionsoptiken, die sich in ihrer Form unterscheiden, zu einer Gesamtlichtverteilung zu überlagern.

Die DE 10 2012 207 621 A1 zeigt ein Projektionsdisplay, das mit einem Bildgeber ausgestattet ist, der in einer Verteilung von Teilbereichen einer Bildgebungsebene des Bildgebers Einzelbilder erzeugt. Das Projektionsdisplay umfasst auch eine Mehrkanaloptik oder Multiapertur Anordnung, die pro Kanal jeweils einen zugeordneten Teilbereich des Bildgebers abbildet, und zwar so, dass sich die Abbildungen der Einzelbilder in einer Projektionsfläche zu einem Gesamtbild zusammenfügen. Das Zusammenfügen der Abbildungen der Einzelbilder soll eine Überlagerung, eine gekachelte Anordnung oder eine teilweise Überlappung der Abbildungen der Einzelbilder sein können. Die Multiaperturanordnung soll aufgrund kurzer Brennweiten innerhalb der Einzelkanäle eine kurzbauende Projektionsoptik gewährleisten. Eine flächenhafte Anordnung der Aperturen soll gleichzeitig die Übertragung eines großen Lichtstroms gewährleisten. In Bezug auf eine Verwirklichung einer vorbestimmten Intensitätsverteilung schlägt diese Schrift vorbestimmte Graustufenverläufe des Bildgebers oder einen Flüssigkristallelemente aufweisenden Bildgeber oder digital mirror devices vor. Diese Bildgeberelemente werden, je nach verwendeter Technik, von dem für die Projektion verwendeten Licht durchleuchtet oder reflektieren Teile dieses Lichtes. Ein Vorteil des Gegenstands dieser Schrift soll in einer Kombination eines großen Schärfentiefebereichs mit einer relativ hohen Projektionshelligkeit bestehen, was ohne Einbußen hinsichtlich der scharfen Darstellung von projizierten Bildmerkmalen erreicht wird.

Den in der DE 10 2012 207 621 A1 zur Verwirklichung einer vorbestimmten Intensitätsverteilung vorgeschlagenen Techniken ist gemeinsam, dass sie eine gewünschte Lichtverteilung dadurch erzeugen, dass sie von einem möglichen maximalen Lichtstrom Teile subtrahieren, indem sie diese Teile absorbieren oder aus dem zur Lichtverteilung beitragenden Lichtstrom herausreflektieren. Beides geht zu Lasten einer erwünscht hohen Effizienz. Als denkbare Anwendung nennt diese Schrift neben vielen anderen Beispielen eine Verwendung der Projektionsdisplays in Frontscheinwerfern, ohne dies jedoch näher auszuführen.

Die DE 10 2004 019 318 B4 zeigt einen Scheinwerfer zur Erzeugung einer Lichtverteilung, der verschiedene Lichtemissionseinheiten aufweist, die jeweils eine Projektorlinse aufweisen, wobei sich zwei Arten von Projektorlinsen in ihrer Brennweite unterscheiden. Die Linsen mit der größeren Brennweite erzeugen spotartige Lichtverteilungen, die schmaler sind als Lichtverteilungen, die von den Linsen mit der kürzeren Brennweite erzeugt werden.

Die DE 10 2004 035 761 A1 zeigt ebenfalls einen Scheinwerfer, der verschiedene Beleuchtungseinheiten aufweist, die jeweils eine Projektorlinse aufweisen, wobei sich zwei Arten von Projektorlinsen in ihrer Brennweite unterscheiden. Die Linsen mit der größeren Brennweite erzeugen spotartige Lichtverteilungen, die schmaler sind als Lichtverteilungen, die von den Linsen mit der kürzeren Brennweite erzeugt werden. Die Beleuchtungseinheiten weisen plattenförmige Blenden ohne Öffnung auf, deren Blendenkante als Hell-Dunkel-Grenze abgebildet wird.

Die Aufgabe der Erfindung besteht in der Angabe eines Kraftfahrzeugscheinwerfers der eingangs genannten Art, mit dem eine gewünschte Intensitätsverteilung erzeugbar ist und der noch effizienter als der aus der eingangs genannten WO 2015/058227 bekannte Scheinwerfer ist.

Diese Aufgabe wird mit den Merkmalen des Anspruchs 1 gelöst. Die Erfindung unterscheidet sich von dem Stand der Technik nach der WO 2015/058227 durch die kennzeichnenden Merkmale des Anspruchs 1.

Dadurch, dass die Projektionslinsen durch die Bildmasken hindurch aus gleichen Richtungen beleuchtet werden, werden auch die Bilder in die gleiche Richtung projiziert. Als Folge überlagern sich die projizierten Bilder der ersten Bildmasken im Fernfeld zu einer Lichtverteilung, welche die Form und Größe der gewünschten Gesamtlichtverteilung besitzt. Dadurch, dass die ersten objektseitigen Brennweiten für die ersten Projektionslinsen identisch sind, werden die beleuchteten Strukturen der ersten Bildmasken mit dem gleichen Vergrößerungsfaktor vergrößert.

Dadurch, dass die zweite Brennweite größer als die erste Brennweite ist, sind die Bilder der zweiten Bildmasken kleiner als die Bilder der ersten Bildmasken, so dass die zweiten Projektionsoptiken einen kleineren Bereich der Gesamtlichtverteilung beleuchten als die ersten Projektionsoptiken. Als Folge ergibt sich in dem kleineren Bereich eine gegenüber dem übrigen Bereich der Gesamtlichtverteilung größere Helligkeit, bzw. Beleuchtungsintensität. In Verbindung mit den übrigen kennzeichnenden Merkmalen des Anspruchs 1 wird eine Vielzahl von Bildern des beleuchteten Teils der zweiten Bildmasken erzeugt und in einem zentralen Bereich der Gesamtlichtverteilung zu einem hellen Zentrum überlagert, was in Verbindung mit der übrigen, durch Projektion von Teilen der ersten Bildmaske erzeugten Lichtverteilung eine gewünschte, ein helles Zentrum aufweisende Gesamtlichtverteilung ergibt.

Eine bevorzugte Ausgestaltung zeichnet sich dadurch aus, dass die ersten Bildmasken untereinander identisch sind und dass die ersten Paare aus ersten Bildmasken und ersten Projektionslinsen so angeordnet sind, dass die ersten Bildmasken in einer ersten Bildmaskenebene und die ersten Projektionslinsen in einer ersten Projektionslinsenebene angeordnet sind, die parallel zur ersten Bildmaskenebene ist und dass Öffnungen der ersten Bildmasken in der ersten Bildmaskenebene liegen und dass die ersten Projektionslinsen in untereinander gleicher Ausrichtung angeordnet sind. Dadurch wird erreicht, dass die projizierten Bilder der ersten Bildmasken im Fernfeld ohne seitlichen Versatz zueinander genau übereinander liegen.

Bevorzugt ist auch, dass die zweiten Bildmasken untereinander identisch sind und dass die zweiten Paare aus zweiten Bildmasken und zweiten Projektionslinsen so angeordnet sind, dass die zweiten Bildmasken in einer zweiten Bildmaskenebene und die zweiten Projektionslinsen in einer zweiten Projektionslinsenebene angeordnet sind, die parallel zur zweiten Bildmaskenebene ist und dass Öffnungen der zweiten Bildmasken in der zweiten Bildmaskenebene Ebene liegen und dass die zweiten Projektionslinsen in untereinander gleicher Ausrichtung angeordnet sind. Durch diese Anordnung und Ausrichtung wird erreicht, dass die projizierten Bilder der zweiten Bildmasken im Fernfeld ohne seitlichen Versatz zueinander genau übereinander liegen.

Ferner ist bevorzugt, dass die zweiten Bildmasken untereinander nicht identisch sind und dass die zweiten Paare aus zweiten Bildmasken und zweiten Projektionslinsen so angeordnet sind, dass die projizierten Bilder der zweiten Bildmasken im Fernfeld verschieden groß sind und sich ineinander liegend überlagern.

Eine weitere bevorzugte Ausgestaltung zeichnet sich dadurch aus, dass er eine für die Beleuchtung der ersten Masken und zweiten Masken gemeinsame Lichtquelle und Beleuchtungsoptik aufweist.

Bevorzugt ist auch, dass der Scheinwerfer ein Lichtquellenfeld aufweist, dessen Lichtquellen jeweils einzeln oder gruppenweise schaltbar eine einzelne Bildmaske oder eine Gruppe von Bildmasken beleuchten.

Ferner ist bevorzugt, dass die ersten Bildmasken untereinander identisch sind und dass die ersten Paare aus ersten Bildmasken und ersten Projektionslinsen so angeordnet sind, dass die projizierten Bilder der ersten Bildmasken im Fernfeld ohne seitlichen Versatz zueinander genau übereinander liegen und dass der Scheinwerfer eine rotes Licht abgebende Lichtquelle, eine grünes Licht abgebende Lichtquelle und eine blaues Licht abgebende Lichtquelle aufweist, wobei die rotes Licht abgebende Lichtquelle eine erste Teilmenge der ersten Masken beleuchtet und die grünes Licht abgebende Lichtquelle eine zweite Teilmenge der ersten Masken beleuchtet und die blaues Licht abgebende Lichtquelle eine dritte Teilmenge der ersten Masken beleuchtet.

Eine weitere bevorzugte Ausgestaltung zeichnet sich dadurch aus, dass die Brennweite der ersten Projektionslinsen und der zweiten Projektionslinsen zwischen 1 mm und 10 mm liegt.

Bevorzugt ist auch, dass die große Brennweite um einen Faktor 2 bis 5 größer als die kleine Brennweite ist.

Ferner ist bevorzugt, dass jede Projektionslinse einen Durchmesser zwischen 2 mm und 3 mm aufweist.

Eine weitere bevorzugte Ausgestaltung zeichnet sich dadurch aus, dass die Summe der Lichtaustrittsflächen der ersten Projektionslinsen und der zweiten Projektionslinsen zwischen 20 cm² und 30 cm² liegt.

Eine weitere bevorzugte Ausgestaltung zeichnet sich dadurch aus, dass die Bildmasken aus transparentem, mit reflektierendem Metall oder absorbierendem Material beschichtetem Material bestehen.

Bevorzugt ist auch, dass die Masken durch Grauton-Lithografie hergestellte Grautonmasken sind.

Ferner ist bevorzugt, dass die Masken durch Flüssigkristallmatrix-Bauelemente mit steuerbarem Transmissions- oder Reflexionsgrad verwirklicht sind.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Dabei bezeichnen gleiche Bezugszeichen in verschiedenen Figuren jeweils gleiche oder zumindest ihrer Funktion nach vergleichbare Elemente. Es zeigen, jeweils in schematischer Form:
- Figur 1: ein erstes Ausführungsbeispiel eines erfindungsgemäßen Kraftfahrzeugscheinwerfers;
- Figur 2: ein Beispiel eines ersten Bildmaskenfeldes;
- Figur 3: ein Beispiel eines zweiten Bildmaskenfeldes;
- Figur 4: eine vom Kraftfahrzeugscheinwerfer der Figur 1 mit den Bildmasken der Figuren 2 und 3 erzeugte Lichtverteilung; und
- Figur 5: ein zweites Ausführungsbeispiel eines erfindungsgemäßen Kraftfahrzeugscheinwerfers.

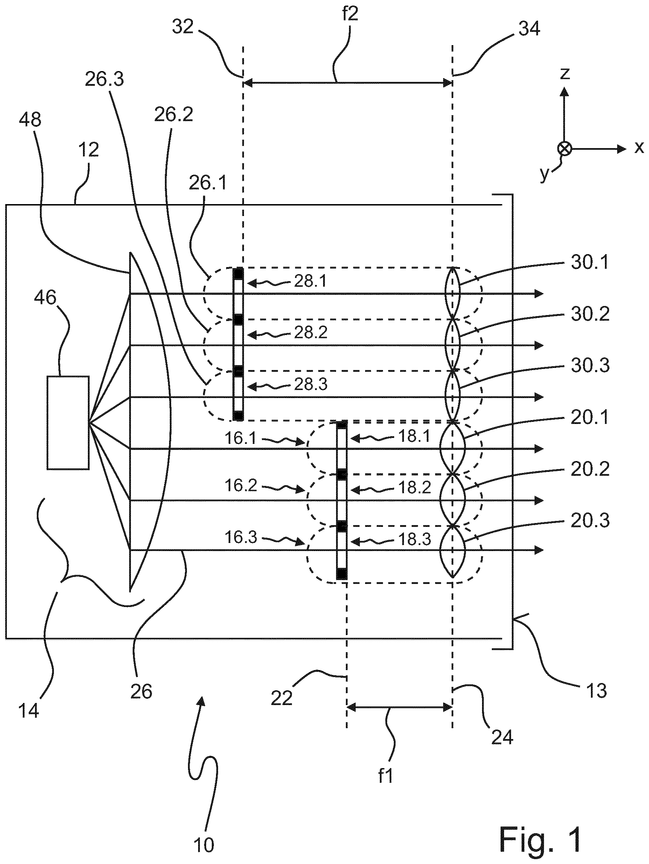

Im Einzelnen zeigt die Figur 1 einen Schnitt durch einen Kraftfahrzeugscheinwerfer 10. Bei einer bestimmungsgemäßen Verwendung des Scheinwerfers in einem Kraftfahrzeug entspricht die angegebene x-Richtung der Geradeausfahrtrichtung und damit der Richtung einer Fahrzeuglängsachse. Die y-Richtung liegt parallel zu einer Querachse des Kraftfahrzeugs, und die z-Richtung liegt parallel zu einer Hochachse des Fahrzeugs. Bei dem in der Figur 1 dargestellten Schnitt handelt es sich daher um einen parallel zur Fahrzeuglängsachse liegenden Vertikalschnitt.

Der Kraftfahrzeugscheinwerfer 10 weist ein Gehäuse 12 auf, dessen Lichtaustrittsöffnung von einer transparenten Abdeckscheibe 13 abgedeckt wird. Im Inneren des Gehäuses 12 befindet sich eine Lichtquellenanordnung 14 und eine Vielzahl n erster Projektionsoptiken 16.1, 16.2, 16.3. Im dargestellten Beispiel ist n = 3. Bei möglichen Realisierungen wird die Zahl n eher zwischen 150 und 500 liegen.

Jede Projektionsoptik 16.i mit i gleich 1 bis n weist ein erstes Paar aus je einer ersten Bildmaske 18.i und je einer ersten Projektionslinse 20.i auf, die durch die je eine Bildmaske 18.i hindurch von der Lichtquellenanordnung 14 beleuchtet wird und die jeweils eine erste objektseitige Brennweite f1 aufweist.

Jede Bildmaske 18.1 jedes ersten Paars, bzw. jeder ersten Projektionsoptik 16.i liegt in einer objektseitigen Brennfläche 22 der ersten Projektionslinse 20.1 des jeweiligen ersten Paars.

Die ersten Projektionslinsen 18.i sind in einer ersten Projektionslinsenebene 24 angeordnet und werden von der Lichtquellenanordnung 14 aus gleichen Richtungen 26 beleuchtet. Die ersten objektseitigen Brennweiten f1 sind für die ersten Projektionslinsen 20.i identisch.

Aufgrund der aus gleicher Richtung erfolgenden Beleuchtung liegen die in das einige Meter vor dem Scheinwerfer 10 liegende Fernfeld projizierten Bilder der Bildmasken 18.i übereinander und überlagern sich so zu einer resultierenden Lichtverteilung.

Darüber hinaus weist der Scheinwerfer 10 eine Vielzahl zweiter Projektionsoptiken 26.i mit i = 1 bis n auf. Jede dieser zweiten Projektionsoptiken 26.i weist ein zweites Paar aus je einer zweiten Bildmaske 28.i und je einer zweiten Projektionslinse 30.1 auf. Jede zweite Projektionslinse 30.i wird durch ihre zugehörige zweite Bildmaske 28.1 hindurch von der Lichtquellenanordnung 14 beleuchtet.

Jede zweite Projektionslinse 30.i weist eine zweite objektseitige Brennweite f2 auf, die größer als die erste Brennweite ist f1 ist. Da die zweite Brennweite f2 größer als die erste Brennweite f1 ist, ergibt sich für die zweiten Projektionsoptiken 26.i eine Vergrößerung, die kleiner ist als die Vergrößerung, die durch die ersten Projektionsoptiken 16.1 erfolgt .

Dabei liegt jede zweite Bildmaske 28.i jedes zweiten Paars in einer objektseitigen Brennfläche 32 der zweiten Projektionslinse 30.i des jeweiligen zweiten Paars, beziehungsweise der zweiten Projektionsoptik 26.i.

Die zweiten Projektionslinsen 30.1 sind in einer zweiten Projektionslinsenebene 34 angeordnet und werden von der Lichtquellenanordnung 14 aus gleichen Richtungen 26 beleuchtet.

Die in der Figur 1 dargestellten ersten Paare, bzw. Projektionsoptiken aus ersten Bildmasken und ersten Projektionslinsen sind so angeordnet, dass die ersten Bildmasken 18.i in einer ersten Bildmaskenebene angeordnet sind, die parallel zur ersten Projektionslinsenebene ist, so dass die Öffnungen der ersten Bildmasken in der ersten Bildmaskenebene liegen. Darüber hinaus sind die ersten Projektionslinsen in untereinander gleicher Ausrichtung angeordnet.

Die in der Figur 1 dargestellten zweiten Paare, bzw. Projektionsoptiken aus zweiten Bildmasken und zweiten Projektionslinsen sind so angeordnet, dass die zweiten Bildmasken 18.i in einer zweiten Bildmaskenebene angeordnet sind, die parallel zur zweiten Projektionslinsenebene ist, so dass die Öffnungen der zweiten Bildmasken in der zweiten Bildmaskenebene liegen. Darüber hinaus sind auch die zweiten Projektionslinsen in untereinander gleicher Ausrichtung angeordnet.

Die objektseitigen Brennweiten f1, f2 der Projektionslinsen liegen bevorzugt zwischen 1 mm und 10 mm, wobei die größere Brennweite f2 bevorzugt um einen Faktor 2 bis 5 größer als die kleinere Brennweite f1 ist.

Jede der Projektionslinsen hat bevorzugt einen Durchmesser, der zwischen 2 mm und 3 mm beträgt. Bevorzugt ist auch, dass die Summe der Lichtaustrittsflächen der ersten Projektionslinsen und der zweiten Projektionslinsen zwischen 20 cm² und 30 cm² liegt. Daraus ergibt sich, dass die Summe der Projektionsoptiken zwischen etwa 300 und 1000 liegt, so dass n bevorzugt zwischen 150 und 500 liegt. In einer bevorzugten Ausgestaltung sind die Projektionslinsen aneinander angrenzend angeordnet.

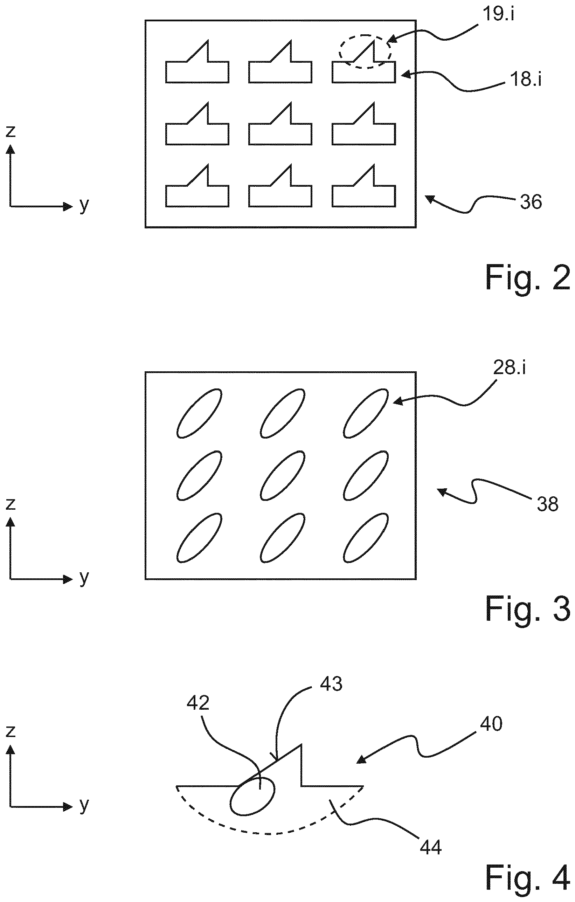

Figur 2 zeigt ein Bildmaskenfeld 36 erster Bildmasken 18.i in einer zur y-z- Ebene parallelen und damit zur Hauptabstrahlrichtung x senkrechten Ebene. Jede erste Bildmaske 18.i weist einen von der Lichtquellenanordnung beleuchteten Teil 19.i der ersten Bildmaske 18.i auf, der eine Form von wenigstens einem ersten Teil einer Gesamtlichtverteilung des Scheinwerfers besitzt. Im dargestellten Beispiel ist dieser erste Teil ein eine Hell-Dunkel-Grenze aufweisender Teil einer Abblendlichtverteilung. Die ersten Bildmasken 18.i des ersten Bildmaskenfeldes 36 sind in dem dargestellten Beispiel identisch.

Figur 3 zeigt ein Bildmaskenfeld 38 zweiter Bildmasken 28.i in einer zur y-z- Ebene parallelen und damit zur Hauptabstrahlrichtung x senkrechten Ebene. Jede zweite Bildmaske 28.i weist einen von der Lichtquellenanordnung 14 beleuchteten Teil der zweiten Bildmaske 28.i auf, der eine Form von wenigstens einem zweiten Teil einer Gesamtlichtverteilung des Scheinwerfers besitzt.
Die zweiten Bildmasken 28.i des zweiten Bildmaskenfeldes 38 sind in dem dargestellten Beispiel identisch.

Im dargestellten Beispiel besitzt der zweite Teil der Gesamtlichtverteilung eine Form eines zentralen Teils der Gesamtlichtverteilung des Scheinwerfers. Im dargestellten Beispiel handelt es sich um einen hellen Spot, der zum Beispiel das Zentrum einer Abblendlichtverteilung verstärkt ausleuchtet.

Figur 4 zeigt eine Gesamtlichtverteilung 40, wie sie sich als Überlagerung der projizierten Bilder im Fernfeld, das heißt einige Meter vor dem Kraftfahrzeug, in einer zur y-z-Ebene parallelen und damit zur Hauptabstrahlrichtung x senkrechten Ebene einstellt. Der helle Spot 42 ergibt sich als Summe der in seiner Fläche liegenden Beiträge der Bilder der ersten Bildmasken 18.1 und der Summe der Bilder der zweiten Bildmasken 28.1. Der den hellen Spot 42 umgebende, eine Hell-Dunkel-Grenze 42 aufweisende, Bereich 44 der Gesamtlichtverteilung 40 ergibt sich als Summe der Beiträge der Bilder der beleuchteten Bereiche 19.i der ersten Bildmasken 18.1

Der helle Spot 42 hat in gleicher Entfernung vom Scheinwerfer eine kleinere Fläche als die von den ersten Projektionslinsen projizierten Bilder 44 der beleuchteten Bereiche 19.i der ersten Bildmasken. Dies liegt vorrangig an der unterschiedlichen Vergrößerung, die bei den zweiten Projektionsoptiken 28.i kleiner ist als bei den ersten Projektionsoptiken 16.i. Die unterschiedliche Vergrößerung ist eine Folge der unterschiedlichen Brennweiten, die bei den zweiten Projektionsoptiken größer ist als bei den ersten Projektionsoptiken.

In einer anderen Ausgestaltung sind die zweiten Bildmasken untereinander nicht identisch und weisen insbesondere unterschiedlich große Öffnungen auf. Die zweiten Paare aus zweiten Bildmasken und zweiten Projektionslinsen sind dabei wie beim vorhergehend beschriebenen Ausführungsbeispiel angeordnet. Bei dieser anderen Ausgestaltung sind die projizierten Bilder der zweiten Bildmasken im Fernfeld verschieden groß und überlagern sich ebenfalls. Sie liegen dann aufgrund ihrer unterschiedlichen Größe nicht mehr deckungsgleich übereinander, sondern eher ineinander. Mit dieser Ausgestaltung lässt sich insbesondere eine zum Beispiel von innen nach außen abnehmende Helligkeit des zentralen Spots erzeugen, die einen weniger abrupten Übergang von dem hellen Spot 42 zum Rest 44 der Lichtverteilung 40 bewirkt. Der Spot kann auch im Bereich der Hell-Dunkel-Grenze, das heißt dort, wo der Spot der Hell-Dunkel-Grenze der Gesamtlichtverteilung nahe kommt, eine Gerade als Begrenzung aufweisen, so dass in diesem Bereich die Kanten, das heißt die Hell-Dunkel-Grenzen beider Masken 18.i, 28.i, aufeinander liegen. Die begrenzende Gerade liegt entweder im horizontal verlaufenden Bereich oder im schrägen Bereich der Hell-Dunkel-Grenze, oder es liegt je eine Gerade im horizontal verlaufenden Bereich und eine Gerade im schräg verlaufenden Bereich der Hell-Dunkel-Grenze.

Sowohl für die ersten Bildmasken 18.1 als auch für die zweiten Bildmasken 28.i gilt, dass diese Bildmasken in einer Ausgestaltung aus transparentem, mit reflektierendem Metall oder absorbierendem Material zum Teil beschichteten Material bestehen können. Die nicht beschichteten Teile bilden die lichtdurchlässigen Öffnungen der Bildmasken. In einer alternativen Ausgestaltung sind die Bildmasken durch Grauton-Lithografie hergestellte Grautonmasken. In einer weiteren alternativen Ausgestaltung werden die Bildmasken durch Flüssigkristallmatrix-Bauelemente mit steuerbarem Transmissions- oder Reflexionsgrad verwirklicht.

Die bis hier beschriebenen Ausgestaltungen weisen eine Lichtquellenanordnung 14 auf, wie sie in der Figur 1 abgebildet ist. Dort besteht die Lichtquellenanordnung 14 aus einer einzelnen Lichtquelle 46 und einer das Licht der einzelnen Lichtquelle sammelnden Beleuchtungsoptik 48, die das gesammelte Licht parallel ausrichtet und die Bildmaskenfelder 36, 38 der Projektionsoptiken 16.i, 26.i mit diesem parallelen Licht beleuchtet.

Die einzelne Lichtquelle 46 ist bevorzugt eine einzelne, weißes Licht emittierende Halbleiterlichtquelle oder eine Gruppe von Halbleiterlichtquellen, die gemeinsam eingeschaltet und ausgeschaltet werden. Bei den Halbleiterlichtquellen handelt es sich zum Beispiel um zunächst Licht oder Laserstrahlung aus dem blauen oder ultravioletten Spektralbereich emittierende Leuchtdioden oder Laserdioden, die mit Hilfe eines Fluoreszenzfarbstoffs zunächst Fluoreszenzlicht und daraus weißes Mischlicht erzeugen. Solche Halbleiterlichtquellen sind aus dem Serieneinsatz bei Automobilscheinwerfern bekannt.

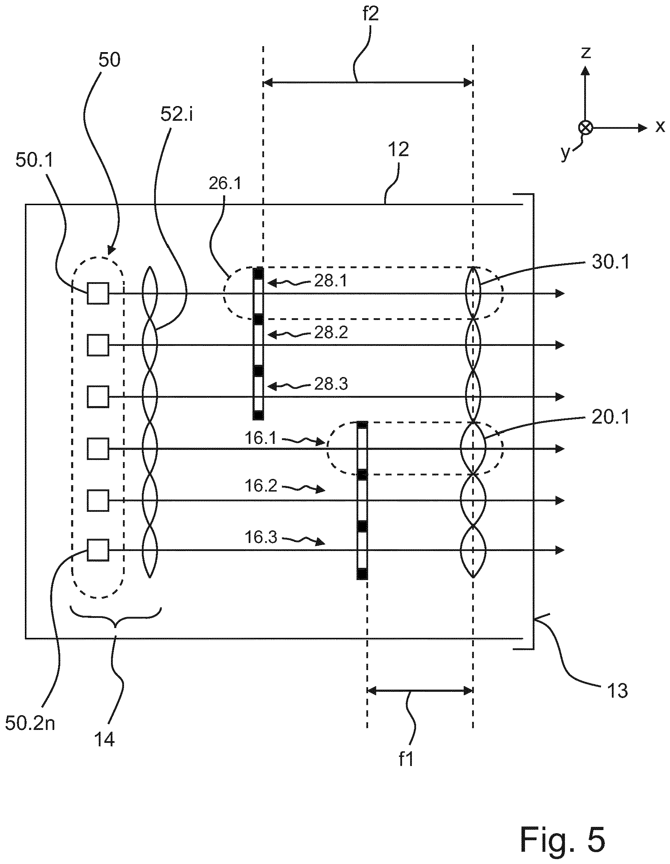

Figur 5 zeigt eine Ausgestaltung, bei der an Stelle einer einzelnen Lichtquelle ein Feld von Einzellichtquellen 50.i mit i = 1 bis 2 n zur Beleuchtung der Bildmasken verwendet wird. Die Einzellichtquellen 50.1 sind bevorzugt ebenfalls Halbleiterlichtquellen der oben angegebenen Art, also weißes Mischlicht emittierende Leuchtdioden oder Laserdioden. Bevorzugt ist für jede Projektionsoptik 16.i, 28.i eine zugehörige Einzellichtquelle 50.i vorhanden, die einzeln steuerbar ist.

Figur 5 zeigt demnach eine Ausgestaltung, die ein Lichtquellenfeld 50 aufweist, dessen Lichtquellen 50.i jeweils einzeln oder gruppenweise schaltbar eine einzelne Bildmaske oder eine Gruppe von Bildmasken beleuchten. Jede Lichtquelle 50.i beleuchtet eine Beleuchtungsteiloptik 52.j mit j = 1 bis 2n, die ihrerseits eine zugeordnete Bildmaske 16.i, 28.i beleuchtet. Mit einer solchen Ausgestaltung ergeben sich weitere Möglichkeiten zur Erzeugung verschiedener Lichtverteilungen, da mit dem Einschalten jeder einzelnen Lichtquelle, bzw. jeder einzelnen Gruppe von Lichtquellen jeweils auch ein Bruchteil einer Intensität (Helligkeit) der Lichtverteilung erzeugt wird.

Die Zahl der Möglichkeiten zur Erzeugung unterschiedlicher Lichtverteilungen lässt sich noch dadurch vergrößern, dass innerhalb eines Bildmaskenfeldes, sei es das erste Bildmaskenfeld oder das zweite Bildmaskenfeld oder auch innerhalb des ersten und des zweiten Bildmaskenfeldes, unterschiedliche Bildmasken verwendet werden. Durch Einschalten und Ausschalten einzelner Lichtquellen oder Gruppen von Lichtquellen lassen sich damit Beiträge verschiedener Bildmasken zuschalten oder abschalten. So ist es zum Beispiel denkbar, bei Stadtverkehr eher breite Lichtverteilungen und bei hohen Geschwindigkeiten eher schmale Lichtverteilungen zu erzeugen, in dem man für die breiten Lichtverteilungen Lichtquellen breit geöffneter Bildmasken einschaltet und diese bei höheren Geschwindigkeiten abschaltet.

In einer weiteren Ausgestaltung ist die Zahl n der Projektionsoptiken jeweils durch 3 teilbar und der Scheinwerfer weist eine rotes Licht abgebende Lichtquelle, eine grünes Licht abgebende Lichtquelle und eine blaues Licht abgebende Lichtquelle auf. Dabei ist die rotes Licht abgebende Lichtquelle oder Gruppe von Lichtquellen so angeordnet, dass sie eine erste Teilmenge der ersten Masken beleuchtet. Analog dazu ist die grünes Licht abgebende Lichtquelle oder Gruppe von Lichtquellen so angeordnet, dass sie eine zweite Teilmenge der ersten Masken beleuchtet, und die blaues Licht abgebende Lichtquelle oder Gruppe von Lichtquellen ist so angeordnet, dass sie eine dritte Teilmenge der ersten Masken beleuchtet

Bei dieser Ausgestaltung sind die ersten Bildmasken untereinander identisch, und die ersten Paare aus ersten Bildmasken und ersten Projektionslinsen sind so sind angeordnet, dass die projizierten Bilder der ersten Bildmasken im Fernfeld ohne seitlichen Versatz zueinander genau übereinander liegen. Durch die Überlagerung der Bilder ergibt sich dann ebenfalls weißes Mischlicht, wie es für Kraftfahrzeugscheinwerfer vorgeschrieben ist. Je nach Lichtfunktion (zum Beispiel Fernlicht) sind vor den Linsen 20, 30 noch Streuelemente denkbar, vorzugsweise mit horizontaler Streuung.

## Patentansprüche

1. Kraftfahrzeugscheinwerfer (10), der aufweist: eine Lichtquellenanordnung (14) und eine Vielzahl erster Projektionsoptiken (16.1, 16.2, 16.3), von denen jede ein erstes Paar aus je einer ersten Bildmaske (18.1, 18.2, 18.3) und je einer ersten Projektionslinse (20.1, 20.2, 20.3) aufweist, die durch die je eine Bildmaske hindurch von der Lichtquellenanordnung (14) beleuchtet wird und die jeweils eine erste objektseitige Brennweite (f1) aufweist, und wobei die Bildmaske jedes ersten Paars in einer objektseitigen Brennfläche (22) der ersten Projektionslinse des jeweiligen ersten Paars liegt und wobei ein von der Lichtquellenanordnung (14) beleuchteter Teil (19.i) einer ersten Bildmaske (18.i) eine Form von wenigstens einem ersten Teil (44) einer Gesamtlichtverteilung (40) des Scheinwerfers besitzt, und wobei die ersten Projektionslinsen (20.1, 20.2, 20.3) in einer ersten Projektionslinsenebene (24) angeordnet sind und von der Lichtquellenanordnung aus gleichen Richtungen (26) beleuchtet werden, **dadurch gekennzeichnet, dass** die ersten objektseitigen Brennweiten (f1) für die ersten Projektionslinsen (20.1, 20.2, 20.3) identisch sind, und dass der Scheinwerfer (10) aufweist: eine Vielzahl zweiter Projektionsoptiken (26.1, 26.2, 26.), von denen jede ein zweites Paar aus je einer zweiten Bildmaske (28.1, 28.2, 28.3) und je einer zweiten Projektionslinse (30.1, 30.2, 30.3) aufweist, die durch die je eine zweite Bildmaske hindurch von der Lichtquellenanordnung (14) beleuchtet wird und die jeweils eine zweite objektseitige Brennweite (f2) aufweist, die größer als die erste Brennweite (f1) ist, und wobei die Bildmaske jedes zweiten Paars in einer objektseitigen Brennfläche (32) der zweiten Projektionslinse des jeweiligen zweiten Paars liegt und wobei ein von der Lichtquellenanordnung (14) beleuchteter Teil der zweiten Bildmaske eine Form von einem zweiten, inneren und vorzugsweise zentralen Teil (42) der Gesamtlichtverteilung (40) des Scheinwerfers besitzt, und wobei die zweiten Projektionslinsen (30.1, 30.2, 30.3) in einer zweiten Projektionslinsenebene (34) angeordnet und von der Lichtquellenanordnung (14) aus gleichen Richtungen (26) beleuchtet werden.

2. Scheinwerfer (10) nach Anspruch 1, **dadurch gekennzeichnet, dass** die ersten Bildmasken (18.1, 18.2, 18.3) untereinander identisch sind und dass die ersten Paare aus ersten Bildmasken (18.1, 18.2, 18.3) und ersten Projektionslinsen (20.1, 20.2, 20.3) so angeordnet sind, dass die ersten Bildmasken (18.1, 18.2, 18.3) in einer ersten Bildmaskenebene (22) angeordnet sind, die parallel zur ersten Projektionslinsenebene (24) ist und dass Öffnungen der ersten Bildmasken (18.1, 18.2, 18.3) in der ersten Bildmaskenebene (22) liegen und dass die ersten Projektionslinsen (20.1, 20.2, 20.3) in untereinander gleicher Ausrichtung angeordnet sind.

3. Scheinwerfer (10) nach Anspruch 1 oder 2 **dadurch gekennzeichnet, dass** die zweiten Bildmasken (28.1, 28.2, 28.3) untereinander identisch sind und dass die zweiten Paare aus zweiten Bildmasken (28.1, 28.2, 28.3) und zweiten Projektionslinsen (30.1, 30.2, 30.3) so angeordnet sind, dass die zweiten Bildmasken (28.1, 28.2, 28.3) in einer zweiten Bildmaskenebene (32) angeordnet sind, die parallel zur zweiten Projektionslinsenebene (34) ist und dass Öffnungen der zweiten Bildmasken (28.1, 28.2, 28.3) in der zweiten Bildmaskenebene (32) liegen und dass die zweiten Projektionslinsen (30.1, 30.2, 30.3) in untereinander gleicher Ausrichtung angeordnet sind.

4. Scheinwerfer (10) nach Anspruch 1 oder 2 **dadurch gekennzeichnet, dass** die zweiten Bildmasken (28.1, 28.2, 28.3) untereinander nicht identisch sind und dass die zweiten Paare aus zweiten Bildmasken (28.1, 28.2, 28.3) und zweiten Projektionslinsen (30.1, 30.2, 30.3) so angeordnet sind, dass die projizierten Bilder der zweiten Bildmasken (28.1, 28.2, 28.3) im Fernfeld verschieden groß sind und sich ineinander liegend überlagern.

5. Scheinwerfer (10) nach einem der vorhergehenden Ansprüche, **dadurch gekennzeichnet, dass** er eine für die Beleuchtung der ersten Bildmasken (18.1, 18.2, 18.3) und zweiten Bildmasken (28.1, 28.2, 28.3) gemeinsame Lichtquelle (14) und Beleuchtungsoptik (48) aufweist.

6. Scheinwerfer (10) nach einem der Ansprüche 1 bis 4, **dadurch gekennzeichnet, dass** er ein Lichtquellenfeld (50) aufweist, dessen Lichtquellen (50.1, 50.n) jeweils einzeln oder gruppenweise schaltbar eine einzelne Bildmaske oder eine Gruppe von Bildmasken beleuchten.

7. Scheinwerfer (10) nach Anspruch 6, **dadurch gekennzeichnet dass** die ersten Bildmasken (18.1, 18.2, 18.3) untereinander identisch sind und dass die ersten Paare aus ersten Bildmasken (18.1, 18.2, 18.3) und ersten Projektionslinsen (20.1, 20.2, 20.3) so angeordnet sind, dass die projizierten Bilder der ersten Bildmasken (18.1, 18.2, 18.3) im Fernfeld ohne seitlichen Versatz zueinander genau übereinander liegen und dass der Scheinwerfer (10) eine rotes Licht abgebende Lichtquelle, eine grünes Licht abgebende Lichtquelle und eine blaues Licht abgebende Lichtquelle aufweist, wobei die rotes Licht abgebende Lichtquelle eine erste Teilmenge der ersten Bildmasken (18.1, 18.2, 18.3) beleuchtet und die grünes Licht abgebende Lichtquelle eine zweite Teilmenge der ersten Bildmasken (18.1, 18.2, 18.3) beleuchtet und die blaues Licht abgebende Lichtquelle eine dritte Teilmenge der ersten Bildmasken (18.1, 18.2, 18.3) beleuchtet.

8. Scheinwerfer nach einem der vorhergehenden Ansprüche, **dadurch gekennzeichnet, dass** die Brennweite der Projektionslinsen (20.1, 20.2, 20.3, 30.1, 30.2, 30.3) zwischen 1 mm und 10 mm liegt.

9. Scheinwerfer (10) nach einem der vorhergehenden Ansprüche, **dadurch gekennzeichnet, dass** die größere der beiden Brennweiten (f1, f2) um einen Faktor 2 bis 5 größer als die kleinere der beiden Brennweiten (f1, f2) ist.

10. Scheinwerfer (10) nach einem der vorhergehenden Ansprüche, **dadurch gekennzeichnet, dass** jede Projektionslinse 20.1, 20.2, 20.3, 30.1, 30.2, 30.3) einen Durchmesser zwischen 2 mm und 3 mm aufweist.

11. Scheinwerfer (10) nach einem der vorhergehenden Ansprüche, **dadurch gekennzeichnet, dass** die Summe der Lichtaustrittsflächen der ersten Projektionslinsen 20.1, 20.2, 20.3) und der zweiten Projektionslinsen (30.1, 30.2, 30.3) zwischen 20 cm² und 30 cm² liegt.

12. Scheinwerfer (10) nach einem der vorhergehenden Ansprüche, **dadurch gekennzeichnet, dass** die Bildmasken aus transparentem, mit reflektierendem Metall oder absorbierendem Material beschichtetem Material bestehen.

13. Scheinwerfer (10) nach einem der Ansprüche 1 bis 11, **dadurch gekennzeichnet, dass** die Bildmasken durch Grauton-Lithografie hergestellte Grautonmasken sind.

14. Scheinwerfer (10) nach einem der Ansprüche 1 bis 11, **dadurch gekennzeichnet, dass** die Bildmasken durch Flüssigkristallmatrix-Bauelemente mit steuerbarem Transmissions- oder Reflexionsgrad verwirklicht sind.

## Claims

1. Headlight of a motor vehicle (10) comprising: a light source arrangement (14) and a plurality of first projection optics (16.1, 16.2, 16.3), of which each has a first pair that is made by a first image mask (18.1, 18.2, 18.3) and a first respective projection lens (20.1, 20.2, 20.3), which is illuminated by the light source arrangement (14) through the one respective image mask and which has a respective first object-sided focal length (f1), and in which the image mask of each first pair is positioned within an object-sided focal area (22) of the first projection lens of the respective first pair and whereby one part (19.i) of the first image mask (18.i) that is illuminated by the light source arrangement (14) features a form of at least one first portion (44) of an overall light distribution (40) of the headlight, and whereby the first projection lenses (20.1, 20.2, 20.3) are arranged within a first projection lens plane (24) and are illuminated by the light source arrangement from same directions (26), **characterized in that** the first object-sided focal lengths (f1) are identical for the first projection lenses (20.1, 20.2, 20.3) and that the headlight (10) comprises: a plurality of second projection optics (26.1, 26.2, 26.3), of which each has a second pair that is made by a second image mask (28.1, 28.2, 28.3) and a second respective projection lens (30.1, 30.2, 30.3), which is illuminated by the light source arrangement (14) through the one respective second image mask and which has a respective second object-sided focal length (f2), which is greater than the first focal length (f1), and in which the image mask of each second pair is positioned within an object-sided focal area (32) of the second projection lens of the respective second pair and whereby one part of the second image mask that is illuminated by the light source arrangement (14) features a form of an inner, preferably central portion (42) of the overall light distribution (40) of the headlight, and whereby the second projection lenses (30.1, 30.2, 30.3) are arranged within a second projection lens plane (34) and are illuminated by the light source arrangement (14) from same directions (26).

2. Headlight (10) according to claim 1, **characterized in that** the first image masks (18.1, 18.2, 18.3) are identical to one another and that the first pairs of first image masks (18.1, 18.2, 18.3) and first projection lenses (20.1, 20.2, 20.3) are arranged in such a way that the first image masks (18.1, 18.2, 18.3) are arranged within a first image mask plane (22), which is parallel to the first projection lens plane (24) and that openings of the first image masks (18.1, 18.2, 18.3) are located within the first image mask plane (22) and that the first projection lenses (20.1, 20.2, 20.3) are arranged in the same orientation with regards to the other.

3. Headlight (10) according to claim 1 or 2, **characterized in that** the second image masks (28.1, 28.2, 28.3) are identical to one another and that the first pairs of second image masks (28.1, 28.2, 28.3) and second projection lenses (30.1, 30.2, 30.3) are arranged in such a way that the second image masks (28.1, 28.2, 28.3) are arranged within a second image mask plane (32), which is parallel to the second projection lens plane (34) and that openings of the second image masks (28.1, 28.2, 28.3) are located within the second image mask plane (32) and that the second projection lenses (30.1, 30.2, 30.3) are arranged in the same orientation with regards to one another.

4. Headlight (10) according to claim 1 or 2, **characterized in that** the second image masks (28.1, 28.2, 28.3) are not identical to one another and that the second pairs of second image masks (28.1, 28.2, 28.3) and of second projection lenses (30.1, 30.2, 30.3) are arranged in such a way that the projected images of the second image masks (28.1, 28.2, 28.3) are of different sizes in the distant field and that they overlap into one another.

5. Headlight (10) according to one of the previous claims, **characterized in that** it has a common light source (14) and illumination optics (48) for the illumination of the first image masks (18.1, 18.2, 18.3) and of the second image masks (28.1, 28.2, 28.3).

6. Headlight (10) according to one of the claims 1 to 4, **characterized in that** it comprises a light source field (50), whose light sources (50.1, 50.n) are switchable either individually or as a group to illuminate a single image mask or a group of image masks.

7. Headlight (10) according to claim 6, **characterized in that** the first image masks (18.1, 18.2, 18.3) are identical with regards to one another and that the first pairs of first image masks (18.1, 18.2, 18.3) and of first projection lenses (20.1, 20.2, 20.3) are arranged in such a way, that the projected images of the first image masks (18.1, 18.2, 18.3) are exactly overlapping in the distant field without any lateral offset to each other and that the headlight (10) has a light source emitting a red light, a light source emitting a green light and a light source emitting a blue light, whereby the light sources emitting the red light illuminates a first subset of the first image masks (18.1, 18.2, 18.3) and the light source emitting the green light illuminates a second subset of the first image masks (18.1, 18.2, 18.3) and the light source emitting the blue light illuminates a third subset of the first masks (18.1, 18.2, 18.3).

8. Headlight (10) according to one of the previous claims, **characterized in that** the focal length of the projection lenses (20.1, 20.2, 20.3, 30.1, 30.2, 30.3) ranges between 1 mm and 10 mm.

9. Headlight (10) according to one of the previous claims, **characterized in that** the greater one of the two focal lengths (f1, f2) is greater than the smaller one of the two focal lengths (f1, f2) by a factor ranging from 2 to 5.

10. Headlight (10) according to one of the previous claims, **characterized in that** each projection lens (20.1, 20.2, 20.3, 30.1, 30.2, 30.3) has a diameter ranging between 2 mm and 3 mm.

11. Headlight (10) according to one of the previous claims, **characterized in that** the sum of the light output surfaces of the first projection lenses (20.1, 20.2, 20.3) and the second projection lenses (30.1, 30.2, 30.3) ranges between 20 cm2 and 30 cm2.

12. Headlight (10) according to one of the previous claims, **characterized in that** the image masks are made of a transparent material that is coated with a reflective (metal) or absorbent material.

13. Headlight (10) according to one of the claims 1 to 11, **characterized in that** the image masks are greyscale masks that are produced by means of greyscale lithography.

14. Headlight (10) according to one of the claims 1 to 11, **characterized in that** the image masks are made by means of liquid crystal matrix elements with controllable transmission or reflection degrees.

## Revendications

1. Phare (10) de véhicule automobile, qui comprend un agencement de sources de lumière (14) et une pluralité de premières optiques de projection (16.1, 16.2, 16.3) dont chacune comprend une première paire constituée d'un premier masque d'image (18.1, 18.2, 18.3) respectif et d'une première lentille de projection (20.1, 20.2, 20.3) respective qui est illuminée par l'agencement de sources de lumière (14) à travers un masque d'image respectif et qui présente une première focale (f1) du côté d'objet, et le masque d'image de chaque première paire étant disposé dans un plan focal (22) du côté d'objet de la première lentille de projection de la première paire respective, et une partie (19.i) d'un premier masque d'image (18.i) illuminé par l'agencement de sources de lumière (14) ayant une forme d'au moins une première partie (44) d'une distribution totale de lumière (40) du phare, et les premières lentilles de projection (20.1, 20.2, 20.3) étant disposées dans un premier plan de lentilles de projection (24) et étant illuminées par l'agencement de sources de lumière à partir des mêmes directions (26), **caractérisé en ce que** les premières focales (f1) du côté d'objet sont identiques pour les premières lentilles de projection (20.1, 20.2, 20.3) et **en ce que** le phare (10) comprend une pluralité de deuxièmes optiques de projection (26.1, 26.2, 26.3) dont chacune comprend une deuxième paire constituée d'un deuxième masque d'image (28.1, 28.2, 28.3) respectif et d'une deuxième lentille de projection (30.1, 30.2, 30.3) respective qui est illuminée par l'agencement de sources de lumière (14) à travers un deuxième masque d'image respectif et qui présente une deuxième focale (f2) du côté d'objet qui est supérieure à la première focale (f1), et le masque d'image de chaque deuxième paire étant disposé dans un plan focal (32) du côté d'objet de la deuxième lentille de projection de la deuxième paire respective, et une partie du deuxième masque d'image illuminé par l'agencement de sources de lumière (14) ayant une forme d'au moins une deuxième partie (44) intérieure et, de préférence, centrale d'une distribution totale de lumière (40) du phare, et les deuxièmes lentilles de projection (30.1, 30.2, 30.3) étant disposées dans un deuxième plan de lentilles de projection (34) et étant illuminées par l'agencement de sources de lumière à partir des mêmes directions (26).

2. Phare (10) selon la revendication 1, **caractérisé en ce que** les premiers masques d'image (18.1, 18.2, 18.3) sont identiques entre eux et que les premières paires constituées de premiers masques d'image (18.1, 18.2, 18.3) et de premières lentilles de projection (20.1, 20.2, 20.3) sont disposées de telle façon que les premiers masques d'image (18.1, 18.2, 18.3) sont disposés dans un premier plan de masques d'image (22) qui est parallèle au premier plan de lentilles de projection (24) et que des ouvertures des premiers masques d'image (18.1, 18.2, 18.3) sont situées dans le premier plan de masques d'image (22) et que les premières lentilles de projection (20.1, 20.2, 20.3) sont disposées avec la même orientation les unes par rapport aux autres.

3. Phare (10) selon la revendication 1 ou 2, **caractérisé en ce que** les deuxièmes masques d'image (28.1, 28.2, 28.3) sont identiques les uns par rapport aux autres et que les deuxièmes paires constituées de deuxièmes masques d'image (28.1, 28.2, 28.3) et de deuxièmes lentilles de projection (30.1, 30.2, 30.3) sont disposées de telle façon que les deuxièmes masques d'image (28.1, 28.2, 28.3) sont disposés dans un deuxième plan de masques d'image (32) qui est parallèle au deuxième plan de lentilles de projection (34) et que des ouvertures des deuxièmes masques d'image (28.1, 28.2, 28.3) sont situées dans le deuxième plan de masques d'image (32) et que les deuxièmes lentilles de projection (30.1, 30.2, 30.3) sont disposées avec la même orientation les unes par rapport aux autres.

4. Phare (10) selon la revendication 1 ou 2, **caractérisé en ce que** les deuxièmes masques d'image (28.1, 28.2, 28.3) ne sont pas identiques entre eux et que les deuxièmes paires constituées de deuxièmes masques d'image (28.1, 28.2, 28.3) et de lentilles de projection (30.1, 30.2, 30.3) sont disposées de telle façon que les images projetées des deuxièmes masques d'image (28.1, 28.2, 28.3) sont de taille différente dans le champ lointain et se superposent en s'emboîtant.

5. Phare (10) selon l'une des revendications précédentes, **caractérisé en ce qu'**il comprend une source de lumière (14) et une optique d'éclairage (48) communes pour l'éclairage des premiers masques d'image (18.1, 18.2, 18.3) et des deuxièmes masques d'image (28.1, 28.2, 28.3).

6. Phare (10) selon l'une des revendications 1 à 4, **caractérisé en ce qu'**il comprend un champ de sources de lumière (50) dont les sources de lumières (50.1, 50.n) éclairent un masque d'image unique ou un groupe de masques d'image, commutables respectivement seul ou en groupe.

7. Phare (10) selon la revendication 6, **caractérisé en ce que** les premiers masques d'image (18.1, 18.2, 18.3) sont identiques entre eux et que les premières paires constituées de premiers masques d'image (18.1, 18.2, 18.3) et de premières lentilles de projection (20.1, 20.2, 20.3) sont disposées de telle façon que les images projetées des premiers masques d'image (18.1, 18.2, 18.3) sont situées dans le champ lointain sans décalage latéral les unes par rapport aux autres, exactement les unes sur les autres, et que le phare (10) comprend une source de lumière émettant de la lumière rouge, une source de lumière émettant de la lumière verte et une source de lumière émettant de la lumière bleue, la source de lumière émettant de la lumière rouge éclairant une première partie des premiers masques d'image (18.1, 18.2, 18.3) et la source de lumière émettant de la lumière verte éclairant une deuxième partie des premiers masques d'image (18.1, 18.2, 18.3) et la source de lumière émettant de la lumière bleue éclairant une troisième partie des premiers masques d'image (18.1, 18.2, 18.3).

8. Phare (10) selon l'une des revendications précédentes, **caractérisé en ce que** la focale des lentilles de projection (20.1, 20.2, 20.3, 30.1, 30.2, 30.3) se situe entre 1 mm et 10 mm.

9. Phare (10) selon l'une des revendications précédentes, **caractérisé en ce que** la plus grande des deux focales (f1, f2) est plus grande d'un facteur de 2 à 5 que la plus petite des deux focales (f1, f2).

10. Phare (10) selon l'une des revendications précédentes, **caractérisé en ce que** chaque lentille de projection (20.1, 20.2, 20.3, 30.1, 30.2, 30.3) présente un diamètre entre 2 mm et 3 mm.

11. Phare (10) selon l'une des revendications précédentes, caractérisé en ce la somme des surfaces de sortie de lumière des premières lentilles de projection (20.1, 20.2, 20.3) et des deuxièmes lentilles de projection (30.1, 30.2, 30.3) est entre 20 cm² et 30 cm².

12. Phare (10) selon l'une des revendications précédentes, **caractérisé en ce que** les masques d'image sont constitués d'un matériau transparent revêtu d'un métal réfléchissant ou d'un matériau absorbant

13. Phare (10) selon l'une des revendications 1 à 11, **caractérisé en ce que** les masques d'image sont des masques de teinte grise fabriqués par lithographie de teinte grise.

14. Phare (10) selon l'une des revendications 1 à 11, **caractérisé en ce que** les masques d'image sont réalisés par des composants à matrice de cristaux liquides avec un degré de transmission ou de réflexion réglable.
